# EUROPEAN PATENT SPECIFICATION

(11) **EP 2 138 475 B1**
(45) Date of publication and mention of the grant of the patent: **03.10.2018**
(21) Application number: 08711974.9
(22) Date of filing: 26.02.2008
(51) Int. Cl.: C04B 37/00, B01D 39/20, B01D 46/00, C09J 1/00, C09J 11/04, C09J 11/08, C09J 101/02, F01N 3/02, C09J 101/28, F01N 13/00, B01D 46/24, C08K 7/00, F01N 3/022, F01N 13/02

(54) **BONDING MATERIAL COMPOSITION, PROCESS FOR PRODUCING THE SAME, AND BONDED ARTICLE AND PROCESS FOR PRODUCING THE SAME**
VERBINDUNGSMATERIALZUSAMMENSETZUNG, HERSTELLUNGSVERFAHREN DAFÜR UND VERBUNDENER ARTIKEL UND HERSTELLUNGSVERFAHREN DAFÜR
COMPOSITION DE MATIÈRE DE COLLAGE, SON PROCÉDÉ DE FABRICATION, ET ARTICLE COLLÉ ET SON PROCÉDÉ DE FABRICATION

(30) Priority: 26.03.2007 JP 2007078405
(43) Date of publication of application: 30.12.2009
(73) Proprietor: NGK Insulators, Ltd., Nagoya-shi, Aichi 467-8530 (JP)
(72) Inventor: KODAMA, Suguru, Nagoya-shi Aichi 467-8530 (JP); TOMITA, Takahiro, Nagoya-shi Aichi 467-8530 (JP)
(74) Representative: Teipel, Stephan
(86) International application number: PCT/JP2008/053245
(87) International publication number: WO 2008/117611

(56) References cited:
- EP-A1- 1 479 882
- EP-A1- 1 939 261
- EP-A1- 2 123 617
- WO-A1-2007/069674
- WO-A1-2007/111056
- WO-A1-2007/116665
- JP-A- 03 140 383
- JP-A- 04 154 638
- JP-A- 51 031 723
- JP-A- 60 005 057
- JP-A- 61 026 572
- JP-A- 2004 001 365
- JP-A- 2006 306 702
- JP-A- 2008 007 683
- US-A- 5 151 253
- Alan Rawle: "BASIC PRINCIPLES OF PARTICLE SIZE ANALYSIS", , 1 January 2000 (2000-01-01), XP055009141, Retrieved from the Internet: URL:http://www.rci.rutgers.edu/~moghe/PSD Basics.pdf [retrieved on 2011-10-11]

## Description

### Technical Field

The present invention relates to a bonding material composition used for unitarily bonding a plurality of target articles to be bonded such as honeycomb segments constituting a honeycomb structure, a unitarily bonded article by the bonding material composition, a method for manufacturing the bonding material composition, and a method for manufacturing a bonded article using the bonding material composition.

### Background Art

A honeycomb structure is widely used as a trapping filter for exhaust gas, for example, as a diesel particulate filter (DPF) for trapping and removing particulate matter contained in exhaust gas from a diesel engine or the like.

Such a honeycomb structure has a structure where a plurality of cells separated and formed by porous partition walls of, for example, silicon carbide (SiC) and functioning as fluid passages are disposed in parallel with one another in the central axial direction. In addition, end portions of adjacent cells are alternately plugged (in a checkerwise pattern) . That is, a cell is open in an end portion on one side and plugged in the other end portion on the other side, and another cell adjacent to the cell is plugged in an end portion on one side and open in the other end portion on the other side.

Such a structure can purify exhaust gas by allowing the partition walls to trap particulate matter in exhaust gas when the exhaust gas passes through the partition wall with allowing the exhaust gas flowing into the predetermined cells (inflow cells) from end portions on one side to discharge via the cells (outflow cells) adjacent to the inflow cells by passing the exhaust gas through the porous partition walls.

In order to continuously use such a honeycomb structure (filter) for a long period, it is necessary to regularly subject the filter to a regeneration treatment. That is, in order to restore the filter performance in the initial state by reducing the pressure loss increased by the particulates deposited with the passage of time inside the filter, it is necessary to combust and remove the particulates deposited inside the filter. Upon regeneration, large thermal stress generates, and there arises a problem that the thermal stress causes defects such as a crack and breakage in the honeycomb structure . In order to cope with the request for improving thermal shock resistance against the thermal stress, there was proposed a honeycomb structure having a divided structure obtained by unitarily bonding a plurality of honeycomb segments by a bonding material layer to impart a function of dispersing and lightening the thermal stress, thereby improving the thermal shock resistance to some extent.

However, in recent years, a further request for increasing the size of a filter has increased, and thermal stress generating upon regeneration also increases in accordance with this. Therefore, in order to solve the aforementioned problem, further improvement of thermal shock resistance as a structure is strongly desired. In order to realize the improvement in thermal shock resistance, the excellent stress relaxation function and bonding strength are demanded in the bonding material layer for unitarily bonding a plurality of honeycomb segment.

Conventionally, there has been disclosed a honeycomb structure where the Young's modulus of the material for the bonding layer between honeycomb segments was made to be 20% or less with respect to that of the material for the honeycomb segment for the purpose of improving thermal shock resistance by improvement of the bonding material layer (see Patent Document 1).

Such decrease in Young's modulus of the bonding material layer is effective in relaxing thermal stress. However, the present decrease in Young's modulus of the bonding material layer is not sufficient yet, and further decrease in Young's modulus is demanded. Increase in porosity is known as an effective means for decrease in Young's modulus of the bonding material layer, and, for increasing porosity, it is effective to raise water content rate in a pasty bonding material composition for forming a bonding material layer.

However, in the case of using massive or spherical particles which have conventionally been used generally as a filler of the bonding material composition, since addition of a small amount of water upon manufacturing a bonding material composition enables to obtain necessary flowability, and addition of superfluous water makes flowability too high and handling difficult, there arises a problem of impossibility of sufficiently increasing porosity. In addition, in the case of increasing porosity by the use of massive or spherical particles for the filler, necessary strength cannot be maintained as the bonding material layer, and thereby a problem of impossibility of obtaining a sound bonded article arises.
Patent Documents 2 and 3 disclose bonding material compositions which comprise flat particles, non-flat particles, and an inorganic adhesive as main components.
Patent Document 1: JP-A-2001-190916
Patent Document 2: EP-A-1 939 261
Patent Document 3: EP-A-2 123 617

### Disclosure of the Invention

The present invention has been made in view of the aforementioned problems of prior art and mainly aims to provide a bonding material composition where a bonding material layer can be made to have a sufficiently high porosity and where necessary strength can be obtained as a bonding material layer.

In order to achieve the aforementioned aim, according to the present invention, there are provided the following bonding material composition, bonded article, method for manufacturing the bonding material composition, and method for manufacturing the bonded article.
[1] A bonding material composition for obtaining a bonded article obtained by unitarily bonding two or more target articles to be bonded by means of a bonding material layer, wherein the bonding material composition contains plate-shaped particles, non-plate-shaped particles, and an inorganic adhesive as main components, wherein the non-plate-shaped particles are massive or spherical particles which have neither the characteristics of the plate-shaped particles nor the characteristics recognized as fibrous or acicular particles, a rate of the plate-shaped particles is 30 to 50 mass% of the whole main components, and the non-plate shaped particles have an average particle size of less than 10 µm, wherein the plate-shaped particles comprise plate-shaped particles A having an average particle size of less than 50 *µ*m and plate-shaped particles B having an average particle size of more than 50 *µ*m.
[2] A bonding material composition according to [1], wherein an aspect ratio of the plate-shaped particles is 3 or more.
[3] A bonding material composition according to [1] or [2], wherein the plate-shaped particles comprise at least one kind of material selected from the group consisting of mica, talc, boron nitride, and glass flake.
[4] A bonding material composition according to [3], wherein the mica is mica calcined at 800°C or more, and the talc is talc calcined at 900°C or more.
[5] A bonding material composition according to any one of [1] to [4], wherein the non-plate-shaped particles comprise at least one kind of material selected from the group consisting of alumina, silica, mullite, zirconia, silicon carbide, silicon nitride, aluminum nitride, and glass.
[6] A bonding material composition according to any one of [1] to [5], wherein the inorganic adhesive is of colloidal silica.
[7] Use of a bonding material composition according to any one of [1] to [6] for bonding honeycomb segments.
[8] A bonded article obtained by unitarily bonding two or more target articles to be bonded by means of a bonding material layer formed by a bonding material composition according to any one of [1] to [6], wherein the bonding material layer has a porosity of 60 to 80% measured by cutting out a portion of the bonding material layer from a honeycomb structure to have an arbitrary shape, and calculating the porosity by the Archimedes method.
[9] A bonded article according to [8], wherein a compression Young's modulus in the thickness direction of the bonding material layer is 5% or less of Young' s modulus of the target article to be bonded, wherein the compression Young's modulus is measured by cutting out a portion of the bonding material layer from a honeycomb structure to have a predetermined shape to obtain a test piece, measuring the displacement of the test piece upon loading a predetermined compression load on the test piece, and calculating the compression Young's modulus from a stress-strain diagram; and wherein the Young's modulus of the target article to be bonded is calculated from a load-displacement curve in a three-point bending strength according to JIS R1601.
[10] A bonded article according to [8] or [9], wherein a test piece cut out from two target article to be bonded and the bonding material layer bonding the two target article has a bending strength of 0.2 MPa or more when the test piece is subjected to a junction bending test, wherein the bending strength in the junction bending test is measured by cutting out a test piece of the bonded article having two articles bonded and a bonding material layer in accordance with JIS R1624, and measuring the strength by the bending test.
[11] A bonded article according to any one of [8] to [10], wherein the target articles to be bonded are honeycomb segments.
[12] A method for manufacturing a bonded material composition, wherein a raw material containing plate-shaped particles, non-plate-shaped articles having the average particle size of less than 10 µm, and an inorganic adhesive as the main components with a rate of the plate-shaped particles being 30 to 50 mass% of the whole main components, is mixed and kneaded to obtain a paste, wherein the non-plate-shaped particles are massive or spherical particles which have neither the characteristics of the plate-shaped particles nor the characteristics recognized as fibrous or acicular particles, and wherein the plate-shaped particles comprise plate-shaped particles A having an average particle size of less than 50 *µ*m and plate-shaped particles B having an average particle size of more than 50 *µ*m.
[13] A method for manufacturing a bonding material composition according to [12], the raw material further contains an organic binder, a dispersant, resin balloons, and water as accessory components.
[14] A method for manufacturing a bonded article, wherein two or more target articles to be bonded are unitarily bonded by the use of a bonding material composition according to any one of [1] to [7] .

In a bonding material composition of the present invention, by the use of the plate-shaped particles as the filler at a predetermined rate, the content rate of water required for obtaining adequate flowability is raised upon manufacturing a pasty bonding material component to be able to sufficiently raise porosity of the bonding material layer. As a result, Young's modulus of the bonding material layer is decreased to be able to relax thermal stress generated in the bonded article. In addition, by using plate-shaped particles as the filler, even if a crack is generated in the bonding material layer, the crack develops with detouring, and, therefore, necessary strength can be maintained with increasing porosity of the bonding material layer. A bonded article of the present invention is obtained by bonding a plurality of target article to be bonded by the use of a bonding material composition having an excellent effect as described above. In addition, since the porosity of the bonding material layer is controlled to be within a predetermined range from the viewpoint of the relaxation of the thermal stress, the bonded article has excellent thermal shock resistance and can suitably be used as a honeycomb structure for, for example, a DPF. According to a method for manufacturing a bonding material composition of the present invention, it is possible to manufacture a bonding material composition having an excellent effect as described above. According to a method for manufacturing a bonded article of the present invention, it is possible to manufacture a bonded article having excellent thermal shock resistance.

### Brief Description of the Drawings

[Fig. 1] Fig. 1 is a perspective schematic view showing an example of an embodiment of a bonded article (honeycomb structure) of the present invention.
[Fig. 2] Fig. 2 is an enlarged view of a main section showing an example of an embodiment of a bonded article (honeycomb structure) of the present invention.
[Fig. 3] Fig. 3 is a perspective schematic view of a target article to be bonded (honeycomb segment) constituting a bonded article (honeycomb structure) of the present invention.
[Fig. 4] Fig. 4 is a cross-sectional view cut along the A-A line in Fig. 3.
[Fig. 5] Fig. 5 is a perspective view showing an example of a test piece cut out from a bonded article.
[Fig. 6] Fig. 6 is a perspective view showing a method of the four point bending test.

### Description of Reference Numerals

1: honeycomb structure, 2: honeycomb segment, 4: coating material, 5: cell, 6: partition wall, 7: filler, 9: bonding material layer, 11: target article to be bonded, 13: test piece, 15: fulcrum point, 17: load point

### Best Mode for Carrying out the Invention

Hereinbelow, the present invention will be described on the basis of a specific embodiment. However, the present invention should not be construed with being limited to the embodiment, and various changes, modifications, and improvements may be added on the basis of knowledge of a person of ordinary skill as long as they do not deviate from the scope of the present invention.

A bonding material composition of the present invention is a bonding material composition for obtaining a bonded article obtained by unitarily bonding two or more target articles to be bonded by means of a bonding material layer and contains plate-shaped particles, non-plate-shaped particles, and an inorganic adhesive as main components. Incidentally, here, "plate-shaped particles, non-plate-shaped particles, and an inorganic adhesive as main components" means that the total amount of plate-shaped particles, non-plate-shaped particles, and an inorganic adhesive is 50 mass% or more of the amount of the whole bonding material composition. In addition, the "plate-shaped particles" means particles characterized by having two or more relatively flat faces, where two of the flat faces are almost parallel with each other and where the distance between the two faces is small in comparison with the long diameter of the two faces. In addition, the "non-plate-shaped particles" means massive or spherical particles which have neither the aforementioned characteristics of the plate-shaped particles nor the characteristics recognized as fibrous or acicular particles.

The most important characteristic of the present invention is that plate-shaped particles are used as a filler for the bonding material composition at a predetermined rate . When plate-shaped particles are used as the filler upon manufacturing a pasty bonding material composition, a content rate of water required for obtaining adequate flowability rises in comparison with the case of using only massive or spherical particles. This is because plate-shaped particles have high specific surface area in comparison with massive or spherical particles. When the water content rate is raised in such a manner, porosity of the bonding material layer obtained by drying and hardening the bonding material composition is raised, and Young's modulus of the bonding material layer is decreased. As described above, since decreasing Young's modulus of the bonding material layer is effective for relaxing thermal stress of the bonded article, by the use of a bonding material composition of the present invention, a bonded article having excellent thermal shock resistance can be obtained. In addition, when plate-shaped particles are used as a filler for the bonding material composition, even if a crack is generated in a bonding material layer, the crack develops with detouring, and, therefore, necessary strength as a bonding material layer can be maintained with increasing porosity of the bonding material layer as described above.

Incidentally, though an identical effect can be obtained also in the case of using inorganic fibers as a filler for the bonding material composition, since a gap can be formed more easily between plate-shaped particles than fibers, porosity can be increased more. In addition, from the viewpoint of safety for the human body, plate-shaped particles have a low potential for causing health problems, while fibers are not always harmless upon being introduced into a body by aspiration or the like.

A rate of the plate-shaped particles contained in a bonding material composition of the present invention is preferably 30 to 50 mass%, more preferably 32 to 48 mass%, further preferably 34 to 46 mass%, of the whole main components (plate-shaped particles, non-plate-shaped particles, and an inorganic adhesive) from the viewpoint of raising porosity of the bonding material layer. When the rate is less than 30 mass% of the main components, the water content rate does not become sufficiently high, and porosity of the bonding material layer does not become high. Therefore, there is a case that Young's modulus does not become sufficiently low. When the rate is more than 50 mass%, porosity of the bonding material layer becomes too high, and there is a case that sufficient bonding strength cannot be obtained.

In addition, for the plate-shaped particles, two kinds of plate-shaped particles having different particle sizes are mixed for use. The average particle size of one kind of the plate-shaped particles (plate-shaped particles A) is less than 50 µm, more preferably 2 to 40 µm, and furthermore preferably 5 to 30 µm from the viewpoint of achieving both sufficient porosity and sufficient bonding strength. In addition, the average particle size of the other kind of the plate-shaped particles (plate-shaped particles B) is 50 µm or more, more preferably 60 to 200 µm, furthermore preferably 70 to 180 µm. When the average particle sizes are out of the above ranges, it is not preferable because it is difficult to achieve both sufficient porosity and sufficient bonding strength. When the plate-shaped particles A and the plate-shaped particles B having different average particle sizes are mixed and used, the water content rate rises, and there is the advantage that sufficient bonding strength can be secured even with the increase of porosity. Incidentally, the plate-shaped particles A and the plate-shaped particles B may be formed from the same material or different materials. In addition, the ratio of the plate-shaped particles A to the plate-shaped particles B (plate-shaped particles A : plate-shaped particles B) is preferably 95:5 to 50:50 in mass ratio from the viewpoint of achieving both high porosity and sufficient bonding strength.

The aspect ratio of the plate-shaped particles is preferably 3 or more, more preferably 5 or more, furthermore preferably 10 or more from the viewpoint of increasing porosity of the bonding material layer. When the aspect ratio of the plate-shaped particles is less than 3, since the water content ratio does not become sufficiently high, and porosity of the bonding material layer does not become high, there is a case that Young's modulus does not fall sufficiently.

The average particle size of the plate-shaped particles is preferably 2 to 200 µm, more preferably 5 to 180 µm, furthermore preferably 50 to 150 µm from the viewpoint of increasing porosity of the bonding material layer. When the average particle size of the plate-shaped particles is less than 2 µm, Young's modulus of the bonding material layer may become too high, while, when it is more than 200 µm, sometimes, sufficient bonding strength cannot be obtained.

Specific examples of the material for the plate-shaped particles include mica, talc, boron nitride, and glass flake, and mica can particularly suitably be used. In addition, with regard to mica and talc, it is preferable to use calcined mica and calcined talc because thermal stability of the bonding material layer improves by previously removing the hydroxyl group in the structure. Incidentally, calcination temperature is preferably 800°C or more for mica and 900°C or more for talc.

In a bonding material composition of the present invention, there are contained non-plate-shaped particles having an average particle size of less than 10 µm, preferably less than 8 µm, more preferably less than 6 µm as a filler other than the aforementioned plate-shaped particle. When non-plate-shaped particles having such an average particle size as a filler are used together with the plate-shaped particles, since the non-plate-shaped particles are filled into the gap between the plate-shaped particles and play a role of bonding, sufficient strength can be obtained even with high porosity.

The rate of the non-plate-shaped particles contained in a bonding material composition of the present invention is preferably 15 to 38 mass%, more preferably 18 to 35 mass%, and furthermore preferably 20 to 33 mass% with respect to the whole main components from the viewpoints of raising porosity of the bonding material layer and securing sufficient bonding strength. When the rate of the non-plate-shaped particles is less than 15 mass% of the whole main components, sometimes, sufficient bonding strength cannot be obtained, while, when it is more than 38 mass%, porosity of the bonding material layer does not become sufficiently high, and Young's modulus may become too high.

Specific suitable examples of the material for the non-plate-shaped particles include alumina, silica, mullite, zirconia, silicon carbide, silicon nitride, aluminum nitride, and glass.

The rate of the inorganic adhesive contained in a bonding material composition of the present invention as the matrix is preferably 20 to 45 mass%, more preferably 25 to 40 mass%, furthermore preferably 30 to 35 mass% of the whole main components from the viewpoint of securing sufficient bonding strength. When the rate of the inorganic adhesive is less than 20 mass% of the whole main components, sometimes, sufficient bonding strength cannot be obtained by insufficient bonding components, while, when it is more than 45 mass%, sometimes, bonding strength cannot be obtained by insufficient filler components.

Specific examples of the material for the inorganic adhesive include colloidal silica (silica sol), colloidal alumina (alumina sol), various kinds of metal oxide sol, ethyl silicate, liquid glass, silica polymer, and aluminum phosphate. It is particularly preferable to use colloidal silica because of excellent adhesion force, compatibility with the filler, chemical stability, thermal resistance, and the like.

In a bonding material composition of the present invention, there may be contained accessory components such as an organic binder, a dispersant, resin balloons, and water as necessary besides the aforementioned main components.

Though there is no particular limitation on the material and kind of these accessory components, it is preferable that methyl cellulose (MC) is contained as the organic binder from the viewpoint of securing thixotropic nature of the paste.

In addition, when a resin balloon (e.g., acrylonitrile based plastic balloon) are contained as an accessory component, the rate of the resin balloons contained in the bonding material composition is preferably 0.1 to 5.0 mass%, more preferably 0.2 to 3.5 mass%, furthermore preferably 0.3 to 2.0 mass% as superaddition with respect to the whole main components from the viewpoint of securing high porosity of the bonding material layer and sufficient bonding strength. When the rate is less than 0.1 mass%, porosity of the bonding material layer does not become sufficiently high, and, sometimes, Young's modulus becomes too high. When it is more than 5.0 mass%, porosity becomes too high, and, sometimes, sufficient bonding strength cannot be obtained.

In a method for manufacturing a bonding material composition of the present invention, to a raw material containing plate-shaped particles, non-plate-shaped particles having an average particle size of less than 10 µm as the main components, and an inorganic adhesive with the rate of the plate-shaped particle being 30 to 50 mass% of the whole main compositions are added an organic binder (e.g., methyl cellulose (MC) and carboxymethyl cellulose (CMC)), resin balloons, a dispersant, water, and the like as necessary, and they are mixed and kneaded by the use of a kneader such as a mixer to obtain paste.

Though there is no particular limitation on the target articles to be bonded by a bonding material composition of the present invention, the bonding material composition is suitable for bonding, for example, ceramic members for obtaining a ceramic structure, particularly suitable for bonding honeycomb segments for obtaining a honeycomb structure, and most suitable for bonding honeycomb segments for obtaining a honeycomb structure used for a diesel exhaust gas purification filter, which is exposed to a severe thermal environment upon a regeneration treatment of the filter.

A bonded article of the present invention is a bonded article obtained by unitarily bonding two or more target articles to be bonded by means of a bonding material layer formed by the aforementioned bonding material composition according to the present invention, and the bonding material layer has a porosity of 60 to 80%, preferably 64 to 76%, more preferably 68 to 72%.

In order to relax thermal stress of a bonded article, it is important to decrease Young's modulus in the thickness direction of the bonding material layer. This depends on the microstructure of the bonding material layer, in particular, porosity of the bonding material layer. In the case that the porosity of the bonding material layer is 60 to 80% as described above, Young's modulus in the thickness direction of the bonding material layer falls, and thermal stress is effectively relaxed. Incidentally, when the porosity of the bonding material layer is less than 60%, Young's modulus in the thickness direction of the bonding material layer rises, while, when it is more than 80%, sometimes, sufficient bonding strength cannot be obtained.

In a bonded article of the present invention, a compression Young's modulus in the thickness direction of the bonding material layer is preferably 5% or less, more preferably 3% or less, furthermore preferably 1% or less of Young's modulus of the target article to be bonded. When the Young's modulus is more than 5%, a crack is easily caused in a product because thermal stress upon practical use cannot be relaxed, which is not preferable.

Incidentally, the "compression Young's modulus in the thickness direction of the bonding material layer" mentioned here is a value calculated out from a stress-strain diagram by measuring displacement of a test piece cut out into a predetermined shape (e.g., 10 × 10 × 1 mm) from a portion from the bonding material layer of the bonded article when a predetermined compression load is applied to the test piece. In addition, the "Young's modulus of the target article to be bonded" is a value calculated out from a load-displacement curve in a three-point bending test in accordance with JIS R1601.

In addition, in a bonded article of the present invention, a test piece cut out from two target article to be bonded and the bonding material layer bonding the two target article had a bending strength of preferably 0.2 MPa or more, more preferably 0.3 MPa or more, furthermore preferably 0.4 MPa or more when the test piece is subjected to a junction bending test. When the bending strength is less than 0.2 MPa, a crack may generate in the bonding material layer due to thermal stress upon practical use.

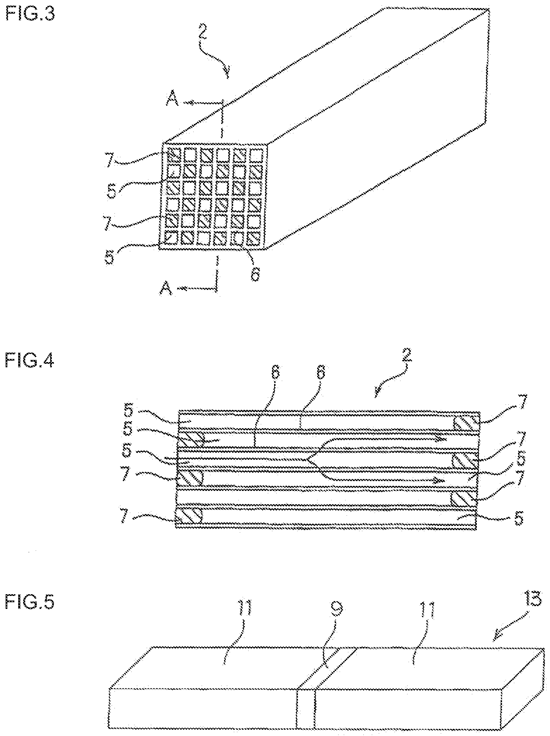

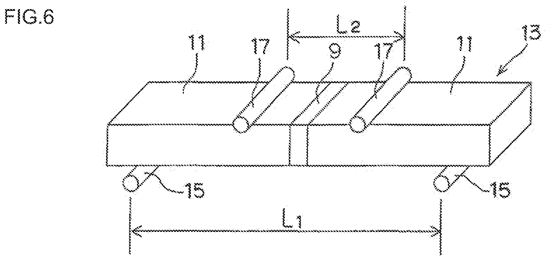

Incidentally, the "junction bending strength" here means a four-point bending strength performed, as shown in Fig. 6, in the state that the distance L₁ between two fulcrum points 15 is 60 mm and that the distance L₂ between two load points 17 is 20 mm by cutting out a test piece (for example, test piece having a structure of 10 × 15 × 70 mm by sandwiching a bonding material layer of 10 × 15 × 1 mm with two target articles to be bonded of 10 × 15 × 34.5 mm, respectively) 13 of a bonded article consisting of two target articles to be bonded 11 and the bonding material layer 9 bonding them as shown in Fig. 5.

Though there is no particular limitation on the target articles to be bonded constituting a bonded article of the present invention, suitable examples include ceramic members for obtaining a ceramic structure, and particularly suitable examples include honeycomb segments for obtaining a honeycomb structure. Such a honeycomb structure obtained by bonding honeycomb segments can suitably be used for, for example, a diesel exhaust gas purification filter exposed to a severe thermal environment upon a regeneration treatment of the filter.

In a method for manufacturing a bonded article of the present invention, two or more target articles to be bonded are unitarily bonded by the use of the aforementioned bonding material composition of the present invention. Incidentally, when target articles to be bonded are bonded by the use of the bonding material composition of the present invention, the bonding temperature is preferably 1000°C or less (more preferably 50 to 900°C, furthermore preferably 100 to 800°C) from the viewpoint of being capable of exhibiting sufficient strength and bonding state . Though bonding can be performed with no problem even at the temperature exceeding 1000°C, desired properties (such as Young's modulus and thermal expansion coefficient) hardly be obtained, which is not preferable.

Next, regarding the case that the bonded article of the present invention is a honeycomb structure obtained by bonding a plurality of honeycomb segments (target article to be bonded), description will be made with specific constitutional examples.

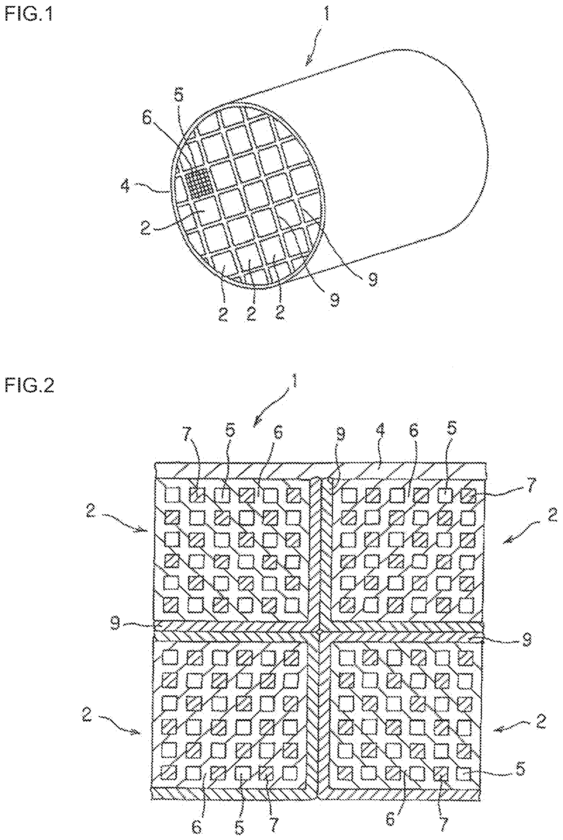

As shown in Figs. 1 and 2, the honeycomb structure 1 is constituted as a honeycomb segment bonded article where honeycomb segments 2 each having a structure where a plurality of cells 5 separated and formed by porous partition walls 6 and functioning as fluid passages are disposed in parallel with one another in a central axial direction, each constituting a part of the whole structure, and constituting the whole structure by being combined in the direction perpendicular to the central axis of the honeycomb structure 1 are unitarily bonded together by the bonding material layer 9 formed of a bonding material composition of the present invention.

The honeycomb segments 2 unitarily bonded by the bonding material layer 9 are subjected to grinding processing after bonding in such a manner that the whole cross section has a desired shape such as a circle, an ellipse, a triangle, a square, etc., and the outer peripheral face is coated with a coating material 4. Incidentally, when the honeycomb structure 1 is used as a DPF, as shown in Fig. 3 and Fig. 4 which is an A-A cross-sectional view of Fig. 3, each cell 5 of each honeycomb segment 2 is alternately plugged in one end portion with a filler 7.

Predetermined cells 5 (inflow cells) are open on the left end portion side in Figs. 3 and 4 and plugged with the filler 7 on the right end portion side, while the other cells 5 (outflow cells) adjacent to the predetermined cells 5 are plugged with the filler on the left end portion side and open on the right end portion side. As shown in Fig. 2, each of the end faces of the honeycomb segment 2 shows a checkerwise pattern by the plugging.

Fig. 4 shows a case where the left side of the honeycomb segment 2 serves as the inlet of exhaust gas, and the exhaust gas flows into the honeycomb segment 2 from the cells 5 (inflow cells) open without plugging. The exhaust gas flowed into the cells 5 (inflow cells) passes through the porous partition walls 6 and is discharged from the other cells 5 (outflow cells). When the exhaust gas passes through the partition walls 6, particulate matter containing soot in the exhaust gas is trapped by the partition walls 6. Thus, purification of exhaust gas can be performed. Such trapping deposits particulate matter containing soot inside the honeycomb segment 2 with the passage of time to increase pressure loss. Therefore, a regeneration treatment for combusting soot and the like is regularly performed. Incidentally, though Figs. 2 to 4 show a honeycomb segment 2 having a square whole cross-sectional shape, the shape may be a triangle, a hexagon, or the like. In addition, the cross-sectional shape of the cells 5 may be a triangle, a hexagon, a circle, an ellipse, or the like.

As shown in Fig. 2, the bonding material layer 9 is formed of a bonding material composition of the present invention and applied on the outer peripheral face of the honeycomb segment 2 to function to bond honeycomb segments 2 with one another. Though the bonding material composition for forming the bonding material layer 9 may be applied on the outer peripheral face of each of the adjacent honeycomb segments 2, it may be applied only on one of the corresponding outer peripheral faces of adjacent honeycomb segments 2. The application on only one of the corresponding faces is preferable in that the amount of the bonding material composition for forming the bonding material layer 9 can be saved. Though there is no particular limitation on the direction of application of the bonding material composition for forming the bonding material layer 9 such as a longitudinal direction in the honeycomb segment outer peripheral face, a direction perpendicular to the longitudinal direction in the honeycomb segment outer peripheral face, and a direction perpendicular to the honeycomb segment outer peripheral face, it is preferably applied toward longitudinal direction in the honeycomb segment outer peripheral face. The thickness of the bonding material layer 9 is determined in consideration of the bonding force between the honeycomb segments 2 and suitably selected within the range of, for example, 0.5 to 3.0 mm.

Examples of the material for the honeycomb segment 2 used in the present embodiment include a material constituted of at least one kind selected from the group consisting of silicon carbide (SiC), a silicon-silicon carbide based composite material formed with silicon carbide (SiC) as the framework and silicon (Si) as the bonding material, silicon nitride, cordierite, mullite, alumina, spinel, a silicon carbide-cordierite based composite material, lithium aluminum silicate, aluminum titanate, and a Fe-Cr-Al based metal from the viewpoints of strength and thermal resistance. Of these, a material constituted of silicon carbide (SiC) or a silicon-silicon carbide based composite material is preferable.

The honeycomb segment 2 can be manufactured by, for example, adding a binder such as methyl cellulose, hydroxypropoxyl cellulose, hydroxyethyl cellulose, carboxymethyl cellulose, and polyvinyl alcohol, a surfactant, water as a solvent, and the like to a material suitably selected from the aforementioned materials to obtain kneaded clay having plasticity and extrusion forming the kneaded clay to have the aforementioned shape, followed by drying with microwaves, hot air, or the like and sintering.

As the filler 7 used for plugging the cells 5, the material used for the honeycomb segment 2 can be used. The plugging by the filler 7 can be performed by immersing an end face of the honeycomb segment 2 in the slurried filler 7 in the state that the cells 5 not to be plugged are masked to fill the filler 7 into the open cells 5 (without being masked) . Though the filling of the filler 7 may be performed before or after firing after forming of the honeycomb segment 2, it is preferably performed before firing because only one firing step is required.

After manufacturing such a honeycomb segment 2, a pasty bonding material composition is applied on the outer peripheral face of the honeycomb segment 2 to form a bonding material layer 9, and a plurality of honeycomb segments 2 are joined to give a predetermined solid shape (whole structure of the honeycomb structure 1), followed by compression bonding and then drying by heating. Thus, a bonded article where a plurality of honeycomb segments 2 are unitarily bonded together is manufactured. Then, the bonded article is subjected to grinding processing to obtain the aforementioned shape, and the outer peripheral face is coated with a coating material 4, followed by drying by heating. Thus, a honeycomb structure 1 shown in Fig. 1 is manufactured. As the material for coating material 4, a material similar to the material for the bonding material layer 9 can be used. The thickness of the coating material 4 is suitably selected within the range of, for example, 0.1 to 1.5 mm.

### Example

Hereinbelow, the present invention will be described in more detail on the basis of Examples. However, the present invention is by no means limited to these Examples.

### (Example 1)

### (Manufacturing of honeycomb segment (target article to be bonded))

As a honeycomb segment raw material, a SiC powder and a metal Si powder is mixed at a mass ratio of 80:20, and a pore former, an organic binder, a surfactant, and water are added to the material to manufacture kneaded clay having plasticity. The kneaded clay was subjected to extrusion forming, followed by drying to obtain a honeycomb segment formed article having a partition wall thickness of 310 µm, a cell density of about 46.5 cells/cm² (300 cells/inch²), a regular tetragonal cross section having a side of 35 mm, and a length of 152 mm. Then, an end portion of each cell was plugged in such a manner that each of the end faces of the honeycomb segment formed article shows a checkerwise pattern. That is, plugging was performed in such a manner that adjacent cells are plugged in an end portion on mutually opposite sides. As the filler for plugging, a material similar to the material for the honeycomb segment raw material was used. After plugging the cells and drying, degreasing was performed at about 400°C in an ambient atmosphere. Then, firing was performed at about 1450°C in an Ar inert atmosphere to obtain a honeycomb segment having porous structure where SiC crystal particles are bonded by Si.

### (Preparation of bonding material composition)

To a mixture of plate-shaped particles A (average particle size of less than 50 µm), plate-shaped particles B (average particle size of 50 µm or more), non-plate-shaped particles, an organic binder, and resin balloons prepared under the conditions shown in Table 1 were added an inorganic adhesive, a dispersant, and water, followed by kneading for 30 minutes by a mixer to obtain each of the pasty bonding material compositions (bonding material compositions No. 1 to 26) having different compositions. At this time, water amount was adjusted in such a manner that the pasty bonding material composition has a viscosity of 20 to 60 Pa·s. Incidentally, the calcined talc used as the plate-shaped particles in the bonding material composition No. 7 was talc calcined at 900°C, and the calcined mica used as the plate-shaped particles in the bonding material composition No. 8 was mica calcined at 800°C. The rates of the plate-shaped particles A, plate-shaped particles B, non-plate-shaped particles, and inorganic adhesive as the main components were shown by mass% when the total amount was employed as 100. In addition, the rates of the organic binder, resin balloons, and dispersant as the accessory components were shown as superadditions by mass% when the total amount was employed as 100. The aspect ratios of the plate-shaped particles A and the plate-shaped particles B were calculated out as "longer diameter / thickness" of the particles, and the "longer diameter" and the "thickness" were measured by electron microscope observation. That is, thickness was measured by image-processing an electron micrograph with observing from an arbitrary direction perpendicular to the thickness direction of the plate-shaped particles. In addition, in the same image, the length of the particle in the direction perpendicular to the thickness direction was determined as the longer diameter, and the longer diameter was measured by image processing. Incidentally, the measurement was performed with respect to particles at 10 or more sites selected at random from the observation vision, and the average value of the aspect ratios was employed as the aspect ratio of the plate-shaped particles.

### (Manufacture of honeycomb structure (bonded article))

The step of coating the bonding material composition No. 1 on the outer wall face of the honeycomb segment with a thickness of about 1 mm along the longitudinal direction of the honeycomb segment to form a bonding material layer and the step of superposing another honeycomb segment were repeated to manufacture a honeycomb segment layered article having 16 (4 × 4) honeycomb segments in total, pressure was suitably applied from outside to bond the whole together, and drying was performed at 140°C for two hours to obtain a honeycomb segment bonded article. After the outer periphery of the honeycomb segment bonded article was subjected to grinding processing, the outer peripheral face was coated with a coating material, followed by drying and hardening at 700°C for 2 hours to obtain a honeycomb structure.

### (Evaluation of bonding material layer of bonded article)

With respect to the bonding material layer of the honeycomb structure, the porosity, the ratio of the compression Young's modulus in the thickness direction of the bonding material layer to the Young's modulus of the target articles to be bonded and the bending strength in a junction bending test of bonding article were obtained by the following methods. The results are shown in Table 2.

### Porosity:

A portion of a bonding material layer was cut out from a honeycomb structure to have an arbitrary shape (e.g., plate shape of 10 × 10 × 1 mm), and the porosity was calculated out by the Archimedes method.

### Compression Young's modulus:

A portion of a bonding material layer was cut out from a honeycomb structure to have a predetermined shape (e.g. , plate shape of 10 × 10 × 1 mm) to obtain a test piece, and a displacement of the test piece upon loading a predetermined compression load on the test piece was measured, and the compression Young's modulus was calculated out from a stress-strain diagram (Young's modulus of the target articles to be bonded were calculated out from a load-displacement curve in a three-point bending strength according to JIS R1601).

### Bending strength in junction bending test:

A test piece (e.g. , 10 × 15 × 70 mm) of the bonded article having two articles bonded and a bonding material layer was cut out in accordance with JIS R1624, and strength by the bending test was measured.

### (Evaluation on honeycomb structure)

A state of the honeycomb structure obtained above after bonding was observed, and a rapid-heating test (burner spalling test) was performed at 900°C and 1000°C by the following method. A crack generation state of the honeycomb structure after the test was observed. The results are shown in Table 3.

### Burner spalling test (rapid-heating test):

In the test, a temperature difference is formed between the central portion and the outside portion by allowing the air heated by a burner to flow into the honeycomb structure, and thermal shock resistance is evaluated by the temperature where no crack is caused in the honeycomb structure (The higher the temperature is, the higher the thermal shock resistance is.) . Incidentally, in Table 3, "Bad" means that a crack is caused at 900°C, "Good" means that no crack is caused at 900°C, and "Excellent" means that no crack is caused at 1000°C.

### (Examples 2 to 22, Comparative Examples 1 to 4)

The honeycomb structures of Examples 2 to 22 were manufactured in the same manner as in Example 1 except that the bonding material composition No. 1 was replaced by the bonding material compositions No. 2 to 22 shown in Table 1. In addition, the honeycomb structures of Comparative Examples 1 to 4 were manufactured in the same manner as in Example 1 except that the bonding material composition No. 1 was replaced by the bonding material compositions No. 23 to 26 shown in Table 1. Each of the honeycomb structures (Examples 2 to 22 and Comparative Examples 1 to 4) was evaluated and tested in the same manner as in Example 1. The results are shown in Tables 2 and 3.

**[Table 1]**

| Bonding material composition No. | Plate-shaped particle A | | | Plate-shaped particle B | | | Non-plate-shaped particle | | Inorganic adhesive (Material/ mass%) | Organic binder (Material/mass%)*1 | Resin balloon (mass%) *2 | Disper - sant (mass%) *3 |
|---|---|---|---|---|---|---|---|---|---|---|---|---|
| | Material & content (Material/mass%) | Aspect ratio | Ave. particl e size (µm) | Material & content (Material/mass%) | Aspect ratio | Ave. particle size (µm) | Material & content (Material/mass%) | Ave. particle size (µm) | | | | |
| 1 | Talc/32.3 | 6 | 25 | - | - | - | Silicon carbide/34.9 | 1.5 | Colloidal silica/32.8 | CMC/0.15, MC/0.30 | 1.5 | 0.07 |
| 2 | Talc/40.3 | 6 | 25 | - | - | - | Silicon carbide/26.9 | 1.5 | Colloidal silica/32.8 | CMC/0.15, MC/0.30 | 1.5 | 0.07 |
| 3 | Talc/48.3 | 6 | 25 | - | - | - | Silicon carbide/18.9 | 1.5 | Colloidal silica/32.8 | CMC/0.15, MC/0.30 | 1.5 | 0.07 |
| 4 | Mica/40.3 | 20 | 20 | - | - | - | Silicon carbide/26.9 | 1.5 | Colloidal silica/32.8 | CMC/0.15, MC/0.30 | 1.5 | 0.07 |
| 5 | Mica/40.3 | 20 | 40 | - | - | - | Silicon carbide/26.9 | 1.5 | Colloidal silica/32.8 | CMC/0.15, MC/0.30 | 1.5 | 0.07 |
| 6 | Glass flake/40.3 | 22 | 40 | - | - | - | Silicon carbide/26.9 | 1.5 | Colloidal silica/32.8 | CMC/0.15, MC/0.30 | 1.5 | 0.07 |
| 7 | Calcined talc/40.3 | 6 | 25 | - | - | - | Silicon carbide/26.9 | 1.5 | Colloidal silica/32.8 | CMC/0.15, MC/0.30 | 1.5 | 0.07 |
| 8 | Calcined mica/40.3 | 20 | 40 | - | - | - | Silicon carbide/26.9 | 1.5 | Colloidal silica/32.8 | CMC/0.15, MC/0.30 | 1.5 | 0.07 |
| 9 | Mica/40.3 | 13 | 40 | - | - | - | Silicon carbide/26.9 | 1.5 | Colloidal silica/32.8 | CMC/0.15, MC/0.30 | 1.5 | 0.07 |
| 10 | Mica/40.3 | 25 | 40 | - | - | - | Silicon carbide/26.9 | 1.5 | Colloidal silica/32.8 | CMC/0.15, MC/0.30 | 1.5 | 0.07 |
| 11 | Talc/31.3 | 6 | 25 | Mica/9.0 | 20 | 60 | Silicon carbide/26.9 | 1.5 | Colloidal silica/32.8 | CMC/0.15, MC/0.30 | 1.5 | 0.07 |
| 12 | Talc/31.3 | 6 | 25 | Glass flake/9.0 | 22 | 160 | Silicon carbide/26.9 | 1.5 | Colloidal silica/32.8 | CMC/0.15, MC/0.30 | 1.5 | 0.07 |
| 13 | Talc/40.3 | 6 | 25 | - | - | - | Alumina/26.9 | 1.6 | Colloidal silica/32.8 | CMC/0.15, MC/0.30 | 1.5 | 0.07 |
| 14 | Talc/40.3 | 6 | 25 | - | - | - | Silica/26.9 | 1.4 | Colloidal silica/32.8 | CMC/0.15, MC/0.30 | 1.5 | 0.07 |
| 15 | Talc/40.3 | 6 | 25 | - | - | - | Mullite/26.9 | 1.5 | Colloidal silica/32.8 | CMC/0.15, MC/0.30 | 1.5 | 0.07 |
| 16 | Talc/40.3 | 6 | 25 | - | - | - | Zirconia/26.9 | 1.3 | Colloidal silica/32.8 | CMC/0.15, MC/0.30 | 1.5 | 0.07 |
| 17 | Talc/40.3 | 6 | 25 | - | - | - | Silicon nitride/26.9 | 0.8 | Colloidal silica/32.8 | CMC/0.15, MC/0.30 | 1.5 | 0.07 |
| 18 | Talc/40.3 | 6 | 25 | - | - | - | Aluminum nitride/26.9 | 0.8 | Colloidal silica/32.8 | CMC/0.15, MC/0.30 | 1.5 | 0.07 |
| 19 | Talc/40.3 | 6 | 25 | - | - | - | Silicon nitride/26.9 | 1.5 | Colloidal silica/32.8 | CMC/0.15, MC/0.30 | 0.5 | 0.07 |
| 20 | Talc/40.3 | 6 | 25 | - | - | - | Silicon nitride/26.9 | 1.5 | Colloidal silica/32.8 | CMC/0.15, MC/0.30 | 2.5 | 0.07 |
| 21 | Talc/40.3 | 6 | 25 | - | - | - | Silicon nitride/26.9 | 1.5 | Colloidal silica/32.8 | CMC/0.15 | 1.5 | 0.07 |
| 22 | Mica/40.3 | 20 | 40 | - | - | - | Silicon nitride/26.9 | 1.5 | Colloidal silica/32.8 | CMC/0.15 | 1.5 | 0.07 |
| 23 | - | - | - | - | - | - | Fiber/40.3 | 300 | Colloidal silica/32.8 | CMC/0.15, MC/0.30 | 1.5 | 0.07 |
| | | | | | | | Silicon Carbide/26.9 | 1.5 | | | | |
| 24 | - | - | - | - | - | - | Silicon carbide/40.3 | 80 | Colloidal silica/32.8 | CMC/0.15, MC/0.30 | 1.5 | 0.07 |
| | | | | | | | Silicon carbide/26.9 | 1.5 | | | | |
| 25 | Talc/25.0 | 6 | 25 | - | - | - | Silicon carbide/42.2 | 1.5 | Colloidal silica/32.8 | CMC/0.15, MC/0.30 | 1.5 | 0.07 |
| 26 | Talc/55.0 | 6 | 25 | - | - | - | Silicon carbide/12.2 | 1.5 | Colloidal silica/32.8 | CMC/0.15, MC/0.30 | 1.5 | 0.07 |

| | | | | | | | | | | | | |
|---|---|---|---|---|---|---|---|---|---|---|---|---|
| *1, *2, *3: Superaddition when the total mass of the whole main components (plate-shaped particles A and B, non-plate-shaped particles, and inorganic adhesive) is 100(%). | | | | | | | | | | | | |

**[Table 2]**

| | Bonding material composition No. | Porosity (%) | Ratio of compression Young's modulus in thickness direction of bonding material layer to Young's modulus of article to be bonded (%) | Strength in junction bending test of bonded article (MPa) |
|---|---|---|---|---|
| Example 1* | 1 | 67 | 0.8 | 0.4 |
| Example 2* | 2 | 70 | 0.6 | 0.3 |
| Example 3* | 3 | 73 | 0.5 | 0.2 |
| Example 4* | 4 | 71 | 0.7 | 0.4 |
| Example 5* | 5 | 71 | 0.6 | 0.4 |
| Example 6* | 6 | 73 | 0.5 | 0.3 |
| Example 7* | 7 | 69 | 0.6 | 0.3 |
| Example 8* | 8 | 70 | 0.6 | 0.4 |
| Example 9* | 9 | 69 | 0.7 | 0.4 |
| Example 10* | 10 | 72 | 0.5 | 0.3 |
| Example 11** | 11 | 70 | 0.6 | 0.4 |
| Example 12** | 12 | 74 | 0.6 | 0.2 |
| Example 13* | 13 | 70 | 0.7 | 0.2 |
| Example 14* | 14 | 69 | 0.6 | 0.2 |
| Example 15* | 15 | 68 | 0.7 | 0.2 |
| Example 16* | 16 | 65 | 0.9 | 0.3 |
| Example 17* | 17 | 67 | 0.8 | 0.3 |
| Example 18* | 18 | 70 | 0.7 | 0.2 |
| Example 19* | 19 | 67 | 0.8 | 0.3 |
| Example 20* | 20 | 72 | 0.5 | 0.2 |
| Example 21* | 21 | 61 | 1.2 | 0.6 |
| Example 22* | 22 | 68 | 0.8 | 0.4 |
| Comp. Ex. 1 | 23 | 56 | 1.2 | 1.1 |
| Comp. Ex. 2 | 24 | 49 | 3.2 | 0.8 |
| Comp. Ex. 3 | 25 | 55 | 2.7 | 0.1 |
| Comp. Ex. 4 | 26 | 75 | 0.4 | 0.1 |

| | | | | |
|---|---|---|---|---|
| * Reference example ** Example according to invention | | | | |

**[Table 3]**

| Example | Bonding material composite No. | State after bonding | Crack in end portion | Crack in outer peripheral portion | Crack in bonding material layer |
|---|---|---|---|---|---|
| Example 1* | 1 | Good | Excellent | Good | Excellent |
| Example 2* | 2 | Good | Excellent | Excellent | Excellent |
| Example 3* | 3 | Good | Excellent | Excellent | Good |
| Example 4* | 4 | Good | Good | Good | Excellent |
| Example 5* | 5 | Good | Excellent | Excellent | Excellent |
| Example 6* | 6 | Good | Excellent | Excellent | Excellent |
| Example 7* | 7 | Good | Excellent | Excellent | Excellent |
| Example 8* | 8 | Good | Excellent | Excellent | Excellent |
| Example 9* | 9 | Good | Excellent | Good | Good |
| Example 10* | 10 | Good | Excellent | Excellent | Excellent |
| Example 11** | 11 | Good | Excellent | Excellent | Excellent |
| Example 12** | 12 | Good | Excellent | Excellent | Good |
| Example 13* | 13 | Good | Excellent | Good | Good |
| Example 14* | 14 | Good | Excellent | Excellent | Good |
| Example 15* | 15 | Good | Good | Good | Good |
| Example 16* | 16 | Good | Good | Good | Excellent |
| Example 17* | 17 | Good | Excellent | Good | Excellent |
| Example 18* | 18 | Good | Excellent | Excellent | Good |
| Example 19* | 19 | Good | Good | Good | Excellent |
| Example 20* | 20 | Good | Excellent | Excellent | Good |
| Example 21* | 21 | Good | Good | Good | Excellent |
| Example 22* | 22 | Good | Excellent | Good | Excellent |
| Comp. Ex. 1 | 23 | Good | Bad | Excellent | Excellent |
| Comp. Ex. 2 | 24 | Good | Good | Bad | Bad |
| Comp. Ex. 3 | 25 | Good | Good | Bad | Bad |
| Comp. Ex. 4 | 26 | Good | Good | Bad | Bad |

| | | | | | |
|---|---|---|---|---|---|
| * Reference example ** Example according to invention | | | | | |

### (Discussion)

From the results of Tables 2 and 3, in Examples 1 to 22 of the present invention, evaluation on the bonding material composition (bonding material layer) after hardening was good, the bonding state between honeycomb segments was good, and no crack was caused in the end portions, outer peripheral portions, and bonding material layer of the honeycomb structure even after the rapid-heating test at 900°C to prove to be a good article. On the other hand, in Comparative Example 1, where a bonding material composition containing fibers were used in place of plate-shaped particles as the filler, a crack was generated in an end portion of the honeycomb structure after the rapid-heating test. In addition, in Comparative Example 2, where a bonding material composition not containing any plate-shaped particle was used as the filler, porosity was not increased sufficiently, and the ratio of the compression Young's modulus in the thickness direction of the bonding material layer to the Young's modulus of the target articles to be bonded was increased to cause cracks in the outer peripheral portion and the bonding material layer of the honeycomb structure after the rapid-heating test. Further, in Comparative Example 3, where a bonding material composition containing plate-shaped particles of less than 30 mass% with respect to the whole main components was used, and Comparative Example 4, where a bonding material composition containing plate-shaped particles of more than 50 mass% with respect to the whole main components was used, bending strength in a junction bending test was low, and cracks were caused in the outer peripheral portion and bonding material layer of the honeycomb structure after rapid-heating test.

### Industrial Applicability

The present invention can suitably be used for manufacturing a bonded article obtained by unitarily bonding a plurality of articles to be bonded, for example, a honeycomb structure obtained by unitarily bonding a plurality of honeycomb segments used for a DPF, or the like.

## Claims

1. A bonding material composition for obtaining a bonded article obtained by unitarily bonding two or more target articles to be bonded by means of a bonding material layer, wherein the bonding material composition contains plate-shaped particles, non-plate-shaped particles, and an inorganic adhesive as main components, wherein the non-plate-shaped particles are massive or spherical particles which have neither the characteristics of the plate-shaped particles nor the characteristics recognized as fibrous or acicular particles, a rate of the plate-shaped particles is 30 to 50 mass% of the whole main components, and the non-plate shaped particles have an average particle size of less than 10 µm, wherein the plate-shaped particles comprise plate-shaped particles A having an average particle size of less than 50 µm and plate-shaped particles B having an average particle size of more than 50 µm.

2. A bonding material composition according to Claim 1, wherein an aspect ratio of the plate-shaped particles is 3 or more.

3. A bonding material composition according to Claim 1 or 2, wherein the plate-shaped particles comprise at least one kind of material selected from the group consisting of mica, talc, boron nitride, and glass flake.

4. A bonding material composition according to Claim 3, wherein the mica is mica calcined at 800°C or more, and the talc is talc calcined at 900°C or more.

5. A bonding material composition according to any one of Claims 1 to 4, wherein the non-plate-shaped particles comprise at least one kind of material selected from the group consisting of alumina, silica, mullite, zirconia, silicon carbide, silicon nitride, aluminum nitride, and glass.

6. A bonding material composition according to any one of Claims 1 to 5, wherein the inorganic adhesive is of colloidal silica.

7. Use of a bonding material composition according to any one of Claims 1 to 6 for bonding honeycomb segments.

8. A bonded article obtained by unitarily bonding two or more target articles to be bonded by means of a bonding material layer formed by a bonding material composition according to any one of Claims 1 to 6, wherein the bonding material layer has a porosity of 60 to 80% measured by cutting out a portion of the bonding material layer from a honeycomb structure to have an arbitrary shape, and calculating the porosity by the Archimedes method.

9. A bonded article according to Claim 8, wherein a compression Young's modulus in the thickness direction of the bonding material layer is 5% or less of Young's modulus of the target article to be bonded, wherein the compression Young's modulus is measured by cutting out a portion of the bonding material layer from a honeycomb structure to have a predetermined shape to obtain a test piece, measuring the displacement of the test piece upon loading a predetermined compression load on the test piece, and calculating the compression Young's modulus from a stress-strain diagram; and wherein the Young's modulus of the target article to be bonded is calculated from a load-displacement curve in a three-point bending strength according to JIS R1601.

10. A bonded article according to Claim 8 or 9, wherein a test piece cut out from two target article to be bonded and the bonding material layer bonding the two target article has a bending strength of 0.2 MPa or more when the test piece is subjected to a junction bending test, wherein the bending strength in the junction bending test is measured by cutting out a test piece of the bonded article having two articles bonded and a bonding material layer in accordance with JIS R1624, and measuring the strength by the bending test.

11. A bonded article according to any one of Claims 8 to 10, wherein the target articles to be bonded are honeycomb segments.

12. A method for manufacturing a bonded material composition, wherein a raw material containing plate-shaped particles, non-plate-shaped particles having the average particle size of less than 10 µm, and an inorganic adhesive as the main components with a rate of the plate-shaped particles being 30 to 50 mass% of the whole main components, is mixed and kneaded to obtain a paste, wherein the non-plate-shaped particles are massive or spherical particles which have neither the characteristics of the plate-shaped particles nor the characteristics recognized as fibrous or acicular particles, and wherein the plate-shaped particles comprise plate-shaped particles A having an average particle size of less than 50 µm and plate-shaped particles B having an average particle size of more than 50 µm.

13. A method for manufacturing a bonding material composition according to Claim 12, the raw material further contains an organic binder, a dispersant, resin balloons, and water as accessory components.

14. A method for manufacturing a bonded article, wherein two or more target articles to be bonded are unitarily bonded by the use of a bonding material composition according to any one of Claims 1 to 6.

## Patentansprüche

1. Bindematerialzusammensetzung zum Erhalt eines Verbundgegenstandes, erhalten durch einheitliches Verbinden von zwei oder mehr Zielgegenständen, die mit Hilfe einer Bindematerialschicht verbunden werden sollen, wobei die Bindematerialzusammensetzung plattenförmige Teilchen, nicht-plattenförmige Teilchen und ein anorganisches Haftmittel als Hauptkomponenten enthält, wobei die nicht-plattenförmigen Teilchen massive oder sphärische Teilchen sind, die weder die Merkmale der plattenförmigen Teilchen noch die Merkmale, die bei faserartigen oder nadelartigen Teilchen zu erkennen sind, aufweisen, das Verhältnis der plattenförmigen Teilchen 30 bis 50 Masse-% der gesamten Hauptkomponenten beträgt, und die nicht-plattenförmigen Teilchen eine durchschnittliche Teilchengröße von weniger als 10 µm haben, wobei die plattenförmigen Teilchen plattenförmige Teilchen A mit einer durchschnittlichen Teilchengröße von weniger als 50 µm und plattenförmige Teilchen B mit einer durchschnittlichen Teilchengröße von mehr als 50 µm umfassen.

2. Bindematerialzusammensetzung nach Anspruch 1, wobei ein Aspektverhältnis der plattenförmigen Teilchen 3 oder mehr beträgt.

3. Bindematerialzusammensetzung nach Anspruch 1 oder 2, wobei die plattenförmigen Teilchen mindestens eine Art von Material, ausgewählt aus der Gruppe, bestehend aus Glimmer, Talk, Bornitrid und Glasflocken, umfassen.

4. Bindematerialzusammensetzung nach Anspruch 3, wobei der Glimmer Glimmer ist, der bei 800 °C oder mehr kalziniert wurde, und der Talk Talk ist, der bei 900 °C oder mehr kalziniert wurde.

5. Bindematerialzusammensetzung nach einem der Ansprüche 1 bis 4, wobei die nicht-plattenförmigen Teilchen mindestens eine Art von Material, ausgewählt aus der Gruppe, bestehend aus Aluminiumoxid, Siliciumdioxid, Mullit, Zirconiumoxid, Siliciumcarbid, Siliciumnitrid, Aluminiumnitrid und Glas, umfassen.

6. Bindematerialzusammensetzung nach einem der Ansprüche 1 bis 5, wobei das anorganische Haftmittel aus kolloidalem Siliciumdioxid ist.

7. Verwendung einer Bindemateriaizusammensetzung nach einem der Ansprüche 1 bis 6 zum Verbinden von Wabensegmenten.

8. Verbundgegenstand, erhalten durch einheitliches Verbinden von zwei oder mehr Zielgegenständen, die mit Hilfe einer Bindematerialschicht verbunden werden sollen, die durch eine Bindematerialzusammensetzung nach einem der Ansprüche 1 bis 6 gebildet wurde, wobei die Bindematerialschicht eine Porosität von 60 bis 80 % hat, die durch Herausschneiden eines Abschnitts der Bindematerialschicht aus einer Wabenstruktur mit einer beliebigen Form und Berechnen der Porosität mit dem Archimedes-Verfahren gemessen wurde.

9. Verbundgegenstand nach Anspruch 8, wobei der Volumenelastizitätsmodul in der Dickenrichtung der Bindematerialschicht 5 % oder weniger des Elastizitätsmoduls des zu verbindenden Zielgegenstandes beträgt, wobei der Volumenelastizitätstsmodul durch Herausschneiden eines Abschnitts der Bindematerialschicht aus einer Wabenstruktur, der eine vorbestimmte Form haben soll, unter Erhalt eines Teststückes, Messen der Verschiebung des Teststückes beim Ausüben einer vorbestimmten Drucklast auf das Teststück und Berechnen des Volumenelastizitätsmoduls aus einem Spannungs-Dehnungs-Diagramm gemessen wird; und wobei der Elastizitätsmodul des zu verbindenden Zielgegenstandes aus einer Last-Verschiebungs-Kurve bei einer Dreipunkt-Biegefestigkeit nach JIS R1601 gemessen wird.

10. Verbundgegenstand nach Anspruch 8 oder 9, wobei ein Teststück, herausgeschnitten aus zwei zu verbindenden Zielgegenständen und der Bindematerialschicht, die die beiden Zielgegenstände verbindet, eine Biegefestigkeit von 0,2 MPa oder mehr hat, wenn das Teststück einem Verbindungsstellenbiegetest unterzogen wird, wobei die Biegefestigkeit in dem Verbindungsstellenbiegetest durch Herausschneiden eines Teststückes des Verbundgegenstandes aus zwei verbundenen Gegenständen und einer Bindematerialschicht nach JIS R1624 und Messen der Festigkeit mit dem Biegetest gemessen wird.

11. Verbundgegenstand nach einem der Ansprüche 8 bis 10, wobei die zu verbindenden Zielgegenstände Wabensegmente sind.

12. Verfahren zur Herstellung einer Bindematerialzusaminensetzung, wobei ein Rohmaterial, enthaltend plattenförmige Teilchen, nicht-plattenförmige Teilchen mit der durchschnittlichen Teilchengröße von weniger als 10 µm und ein anorganisches Haftmittel als die Hauptkomponenten, wobei das Verhältnis der plattenformigen Teilchen 30 bis 50 Masse-% der gesamten Hauptkomponenten beträgt, unter Erhalt einer Paste gemischt und geknetet wird, wobei die nicht-plattenförmigen Teilchen massive oder sphärische Teilchen sind, die weder die Merkmale der plattenförmigen Teilchen noch die Merkmale, die bei faserartigen oder nadelartigen Teilchen zu erkennen sind, aulweisen, und wobei die plattenförmigen Teilchen plattenförmige Teilchen A mit einer durchschnittlichen Teilchengröße von weniger als 50 µm und plattenförmige Teilchen B mit einer durchschnittlichen Teilchengröße von mehr als 50 µm umfassen.

13. Verfahren zur Herstellung einer Bindematerialzusammensetzung nach Anspruch 12, wobei das Rohmaterial ferner ein organisches Bindemittel, ein Dispergiermittel, Harzballons und Wasser als Nebenkomponenten enthält.

14. Verfahren zur Herstellung eines Verbundgegenstandes, wobei zwei oder mehr zu verbindende Zielgegenstände unter Verwendung einer Bindematerialzusammensetzung nach einem der Ansprüche 1 bis 6 einheitlich verbunden werden.

## Revendications

1. Composition de matériau de collage pour obtenir un article collé obtenu en collant de manière unitaire deux articles cibles ou plus à coller au moyen d'une couche de matériau de collage, dans lequel la composition de matériau de collage comprend des particules en forme de plaque, des particules non en forme de plaque, et un adhésif inorganique en tant que composants principaux, dans laquelle les particules non en forme de plaque sont des particules massives ou sphériques qui n'ont ni les caractéristiques des particules en forme de plaque ni les caractéristiques reconnues comme particules fibreuses ou aciculaires, un taux des particule en forme de plaque représentent 30 à 50% en masse de l'ensemble des composants principaux et les particules non en forme de plaque ont une taille de particule moyenne de moins de 10 µm, dans laquelle les particules en forme de plaque comprennent des particules en forme de plaque A ayant une taille de particule moyenne de moins de 50 µm et des particules en forme de plaque B ayant une taille de particule moyenne de plus de 50 µm.

2. Composition de matériau de collage selon la revendication 1, dans laquelle le rapport de longueur des particules en forme de plaque est de 3 ou plus.

3. Composition de matériau de collage selon la revendication 1 ou 2, dans laquelle les particules en forme de plaque comprennent au moins un type de matériau choisi dans le groupe constitué de mica, talc, nitrure de bore et flocon de verre.

4. Composition de matériau de collage selon la revendication 3, dans laquelle le mica est du mica calciné à 800 °C ou plus et le talc est du talc calciné à 900 °C ou plus.

5. Composition de matériau de collage selon l'une quelconque des revendications 1 à 4, dans laquelle les particules non en forme de plaque comprennent au moins un type de matériau choisi dans le groupe constitué par l'alumine, la silice, la mullite, la zircone, le carbure de silicium, le nitrure de silicium, le nitrure d'aluminium et le verre.

6. Composition de matériau de collage selon l'une quelconque des revendications 1 à 5, dans laquelle l'adhésif inorganique est de la silice colloïdale.

7. Utilisation d'une composition de matériau de collage selon l'une quelconque des revendications 1 à 6 pour coller des segments en nid d'abeilles.

8. Article collé obtenu en collant de manière unitaire deux articles cibles à coller ou plus au moyen d'une couche de matériau de collage formée par une composition de matériau de collage selon l'une quelconque des revendications 1 à 6, dans lequel la couche de matériau de collage a une porosité de 60 à 80% mesurée en coupant une partie de la couche de matériau de collage à partir d'une structure en nid d'abeilles pour avoir une forme arbitraire et en calculant la porosité par la méthode d'Archimède.

9. Article collé selon la revendication 8, dans lequel un module de Young de compression dans la direction de l'épaisseur de la couche de matériau de collage représente 5% ou moins du module de Young de l'article cible à coller, dans lequel le module de Young de compression est mesuré en découpant une partie de la couche de matériau de collage à partir d'une structure en nid d'abeilles pour avoir une forme prédéterminée pour obtenir une pièce de test, en mesurant le déplacement de la pièce de test lors du chargement d'une charge de compression prédéterminée sur la pièce de test et en calculant le module de Young de compression à partir d'un diagramme contrainte-déformation ; et dans lequel le module de Young de l'article cible à coller est calculé à partir d'une courbe de déplacement de charge en une résistance à la flexion sur trois points selon JIS R1601.

10. Article collé selon la revendication 8 ou 9, dans lequel une pièce de test découpée dans deux articles cibles à coller et la couche de matériau de collage collant les deux articles cibles a une résistance à la flexion de 0,2 MPa ou plus lorsque la pièce de test est soumise à un test de flexion de jonction, dans lequel la résistance à la flexion dans le test de flexion de jonction est mesurée en découpant une pièce de test de l'article collé ayant deux articles collés et une couche de matériau de collage selon JIS R1624, et en mesurant la résistance avec le test de flexion.

11. Article collé selon l'une quelconque des revendications 8 à 10, dans lequel les articles cibles à coller sont des segments en nid d'abeilles.

12. Procédé de fabrication d'une composition de matériau collé, dans lequel une matière première contenant des particules en forme de plaque, des particules non en forme de plaque ayant une taille de particule moyenne inférieure à 10 µm et un adhésif inorganique en tant que composants principaux à un taux des particules en forme de plaque représentant 30 à 50% en masse de l'ensemble des composants principaux, est mélangée et malaxée pour obtenir une pâte, dans lequel les particules non en forme de plaque sont des particules massives ou sphériques qui n'ont ni les caractéristiques des particules en forme de plaque ni les caractéristiques reconnues comme des particules fibreuses ou aciculaires et dans lequel les particules en forme de plaque comprennent des particules en forme de plaque A ayant une taille de particule moyenne de moins de à 50 µm et des particules en forme de plaque B ayant une taille de particule moyenne de plus de 50 µm.

13. Procédé de fabrication d'une composition de matériau collé selon la revendication 12, la matière première comprenant en outre un liant organique, un dispersant, des ballons de résine et de l'eau en tant que composants accessoires.

14. Procédé de fabrication d'un article collé, dans lequel deux articles cibles à coller ou plus sont collés de manière unitaire en utilisant une composition de matériau de collage selon l'une quelconque des revendications 1 à 6.
